(19) Europäisches Patentamt
European Patent Office
Office européen des brevets

(11)  EP 3 220 399 B1

(12)  **EUROPEAN PATENT SPECIFICATION**

(45) Date of publication and mention
of the grant of the patent:
**11.09.2019  Bulletin 2019/37**

(51) Int Cl.:
***H01G 9/20*** (2006.01)

(21) Application number: **15859283.2**

(22) Date of filing: **04.11.2015**

(86) International application number:
**PCT/JP2015/080975**

(87) International publication number:
**WO 2016/076161 (19.05.2016 Gazette 2016/20)**

(54) **ELECTROLYTE FOR DYE-SENSITIZED PHOTOELECTRIC CONVERSION ELEMENTS FOR LOW LUMINANCE, AND DYE-SENSITIZED PHOTOELECTRIC CONVERSION ELEMENT FOR LOW LUMINANCE USING SAME**

ELEKTROLYT FÜR FARBSTOFFSENSIBILISIERTE PHOTOELEKTRISCHE UMWANDLUNGSELEMENTE FÜR NIEDRIGE LUMINANZ UND FARBSTOFFSENSIBILISIERTES PHOTOELEKTRISCHES UMWANDLUNGSELEMENT FÜR NIEDRIGE LUMINANZ MIT VERWENDUNG DAVON

ÉLECTROLYTE POUR ÉLÉMENTS DE CONVERSION PHOTOÉLECTRIQUE SENSIBILISÉS PAR COLORANT POUR LUMINANCE FAIBLE, ET ÉLÉMENT DE CONVERSION PHOTOÉLECTRIQUE SENSIBILISÉ PAR COLORANT POUR LUMINANCE FAIBLE UTILISANT LEDIT ÉLECTROLYTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.11.2014  JP 2014230017**

(43) Date of publication of application:
**20.09.2017  Bulletin 2017/38**

(73) Proprietor: **Fujikura Ltd.**
**Tokyo 135-8512 (JP)**

(72) Inventors:
• **KATSUMATA Kenji**
**Sakura-shi**
**Chiba 285-8550 (JP)**
• **MATSUMOTO Daisuke**
**Sakura-shi**
**Chiba 285-8550 (JP)**

(74) Representative: **Hoffmann Eitle**
**Patent- und Rechtsanwälte PartmbB**
**Arabellastraße 30**
**81925 München (DE)**

(56) References cited:
**WO-A1-2007/010658     WO-A1-2014/017536**
**JP-A- H02 204 978      JP-A- S60 170 173**
**JP-A- 2004 273 272     JP-A- 2006 339 199**
**JP-A- 2006 351 651**

• **Heléne Paulsson ET AL: "Molten and solid metal-iodide-doped trialkylsulphonium iodides and polyiodides as electrolytes in dye-sensitized nanocrystalline solar cells", SOLAR ENERGY MATERIALS AND SOLAR CELLS., vol. 82, no. 3, 1 May 2004 (2004-05-01), pages 345-360, XP55541943, NL ISSN: 0927-0248, DOI: 10.1016/j.solmat.2003.12.005**

**Description**

TECHNICAL FIELD

The present invention relates to an electrolyte of a dye-sensitized photoelectric conversion element for low illuminance and a dye-sensitized photoelectric conversion element for low illuminance using the same.

BACKGROUND ART

Dye-sensitized photoelectric conversion elements have been developed by Grätzel et al. of Switzerland and are a next generation photoelectric conversion element attracting attention because they have advantages such as a high photoelectric conversion efficiency and low manufacturing cost. The documents JP S60170173A and by H. Paulsson et al, Solar Energy Materials and Solar Cells, 82(2004), 345-360, describe dye-sensitized solar devices.

Generally, dye-sensitized photoelectric conversion elements are equipped with at least one dye-sensitized photoelectric conversion cell, and the dye-sensitized photoelectric conversion cell is equipped with a first electrode, a second electrode facing the first electrode, an oxide semiconductor layer provided on the first electrode or the second electrode, and an electrolyte provided between the first electrode and the second electrode.

In recent years, a dye-sensitized photoelectric conversion element for low illuminance which is able to generate power by light having a low illuminance has been proposed as such a dye-sensitized photoelectric conversion element.

For example, a dye-sensitized photoelectric conversion element for low illuminance in which a specific photosensitizing dye and a co-adsorbent are adsorbed to an oxide semiconductor layer is disclosed in JP-A-2014-110133.

SUMMARY OF THE INVENTION

PROBLEM TO BE SOLVED BY THE INVENTION

However, the dye-sensitized photoelectric conversion element for low illuminance described in JP-A-2014-110133 has the following problems.

In other words, the dye-sensitized photoelectric conversion element for low illuminance described in JP-A-2014-110133 generates an excessive output when being exposed to light having a high illuminance such as sunlight. Hence, the dye-sensitized photoelectric conversion element for low illuminance described in JP-A-2014-110133 still has room for improvement in suppression of damage to the low-power driven device in the case of using this as a power source of a low-power driven device. Hence, an electrolyte of a dye-sensitized photoelectric conversion element for low illuminance which can sufficiently maintain the output of the dye-sensitized photoelectric conversion element under a condition having a low illuminance and sufficiently suppress an increase in output of the dye-sensitized photoelectric conversion element under a condition having a high illuminance has been desired. Incidentally, the term "high illuminance" means an illuminance exceeding 10,000 lux and the term "low illuminance" means an illuminance of 10,000 lux or less in the present specification.

The present invention has been made in view of the above circumstances, and an object thereof is to provide an electrolyte of a dye-sensitized photoelectric conversion element for low illuminance which can sufficiently maintain the output of the dye-sensitized photoelectric conversion element under a condition having a low illuminance and sufficiently suppress an increase in output of the dye-sensitized photoelectric conversion element under a condition having a high illuminance and a dye-sensitized photoelectric conversion element for low illuminance using the same.

MEANS FOR SOLVING PROBLEM

In order to solve the above problems, the present inventors have carried out intensive studies focusing on the composition of the electrolyte. As a result, it has been found out that the above problems can be solved by setting the concentration of a silver halide in the electrolyte to a predetermined concentration, whereby the present invention has been completed.

In other words, the present invention provides an electrolyte of a dye-sensitized photoelectric conversion element for low illuminance, comprising:

- a halogen,
- a halide salt forming a redox couple with the halogen,
- a silver halide at a concentration of 0.0001-10 mM, and
- an organic solvent.

Also, the invention provides a dye-sensitized photoelectric conversion element for low illuminance comprising at least one dye-sensitized photoelectric conversion cell including:

- a first electrode;
- a second electrode facing the first electrode;
- an oxide semiconductor layer provided on the first electrode or the second electrode; and
- provided between the first electrode and the second electrode, an electrolyte including the electrolyte of the invention as defined above.

According to the electrolyte of a dye-sensitized photoelectric conversion element for low illuminance of the present invention, it is possible to sufficiently maintain the output of the dye-sensitized photoelectric conversion element under a condition having a low illuminance and to sufficiently suppress an increase in output of the dye-sensitized photoelectric conversion element under a condition having a high illuminance.

The present inventors presume as follows as the reason for obtaining such an effect. In other words, in a case in which the electrolyte of the present invention is used as the electrolyte of a dye-sensitized photoelectric conversion cell contained in a dye-sensitized photoelectric conversion element, the silver halide in the electrolyte is decomposed into silver and a halogen when the dye-sensitized photoelectric conversion element is exposed to light having a high illuminance such as sunlight. Thereafter, the precipitated silver suppresses the power generation by the dye-sensitized photoelectric conversion element by lowering the injection efficiency of electrons on the surface of the oxide semiconductor layer or the electrode surface or hindering the movement of charges in the electrolyte. Meanwhile, since the precipitated silver reacts with the halogen to return to the silver halide and the silver halide dissolves in the electrolyte again when the illuminance of the irradiation light decreases, the amount of power generated by the dye-sensitized photoelectric conversion element returns to the original value. The present inventors presume that the above effect can be thus obtained according to the electrolyte of the present invention.

In the electrolyte of a dye-sensitized photoelectric conversion element for low illuminance, it is preferable that the ratio of the concentration of the silver halide to the concentration of the halogen be greater than $1 \times 10^{-5}$ times.

When the ratio of the concentration of the silver halide to the concentration of the halogen is greater than $1 \times 10^{-5}$ times, the concentration of the silver halide is relatively great and the equilibrium reaction between the silver halide and silver proceeds in the direction in which the concentration of silver increases. Hence, in a case in which the electrolyte is used as the electrolyte of a dye-sensitized photoelectric conversion cell contained in a dye-sensitized photoelectric conversion element, it is possible to more sufficiently suppress an increase in output of the dye-sensitized photoelectric conversion element when the dye-sensitized photoelectric conversion element is placed under a condition having a high illuminance.

In the electrolyte of a dye-sensitized photoelectric conversion element for low illuminance, it is preferable that the ratio of the concentration of the silver halide to the concentration of the halogen be $2 \times 10^{-5}$ times or more.

In this case, it is possible to more sufficiently suppress an increase in output under a condition having a high illuminance as compared to a case in which the concentration ratio is less than $2 \times 10^{-5}$ times.

In the electrolyte of a dye-sensitized photoelectric conversion element for low illuminance, it is preferable that the ratio of the concentration of the silver halide to the concentration of the halogen be 1 time or less.

In this case, the output is higher under a condition having a low illuminance as compared to a case in which the concentration ratio exceeds 1 time.

In the electrolyte of a dye-sensitized photoelectric conversion element for low illuminance, it is preferable that the concentration of the silver halide be 0.0001-0.01 mM.

In this case, it is possible to sufficiently maintain the output of the dye-sensitized photoelectric conversion element under a condition having a low illuminance and to sufficiently suppress an increase in output of the dye-sensitized photoelectric conversion element under a condition having a high illuminance.

In the electrolyte of a dye-sensitized photoelectric conversion element for low illuminance, it is preferable that the halogen atom constituting the silver halide be the same as the halogen atom constituting the halogen and the halide salt.

In this case, an output suppressing effect can be stably obtained.

In addition, the present invention is a dye-sensitized photoelectric conversion element for low illuminance which is equipped with at least one dye-sensitized photoelectric conversion cell, in which the dye-sensitized photoelectric conversion cell is equipped with a first electrode, a second electrode facing the first electrode, an oxide semiconductor layer provided on the first electrode or the second electrode, and an electrolyte provided between the first electrode and the second electrode, in which the electrolyte is composed of the electrolyte of a dye-sensitized photoelectric conversion element for low illuminance described above.

According to the dye-sensitized photoelectric conversion element for low illuminance of the present invention, it is possible to sufficiently maintain the output under a condition having a low illuminance and to sufficiently suppress an increase in output under a condition having a high illuminance.

Incidentally, in the present invention, the "concentration of halogen" and the "concentration of silver halide" both refer to the concentrations measured in a dark room.

EFFECT OF THE INVENTION

According to the present invention, an electrolyte of a dye-sensitized photoelectric conversion element for low illuminance which can sufficiently maintain the output of the dye-sensitized photoelectric conversion element under a condition having a low illuminance and sufficiently suppress an increase in output of the dye-sensitized photoelectric conversion element under a condition having a high illuminance and a dye-sensitized photoelectric conversion element for low illuminance using the same are provided.

BRIEF DESCRIPTION OF DRAWINGS

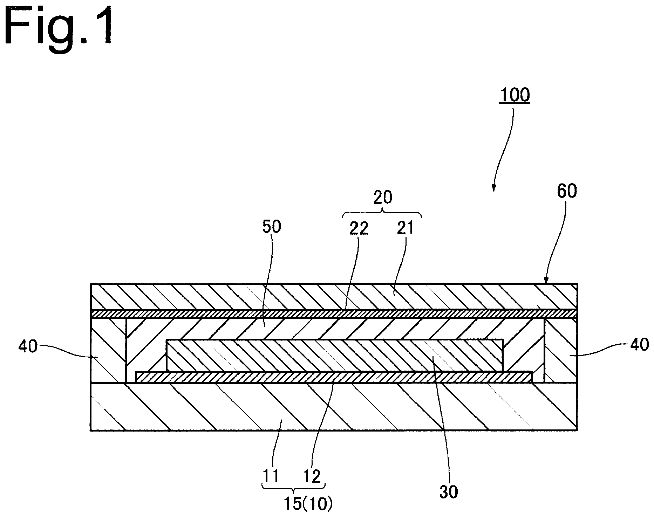

Fig. 1 is a cross-sectional view which illustrates an embodiment of a dye-sensitized photoelectric conversion element for low illuminance of the present invention.

MODE(S) FOR CARRYING OUT THE INVENTION

Hereinafter, embodiments of the present invention will be described in detail with reference to Fig. 1. Fig. 1 is a cross-sectional view which illustrates an embodiment of the dye-sensitized photoelectric conversion element for low illuminance of the present invention.

As illustrated in Fig. 1, a dye-sensitized photoelectric conversion element 100 is constituted by one dye-sensitized photoelectric conversion cell 60, and the dye-sensitized photoelectric conversion cell 60 is equipped with a first electrode substrate 10, a second electrode substrate 20 facing the first electrode substrate 10, an oxide semiconductor layer 30 provided on the first electrode substrate 10, and an annular sealing portion 40 which connects the first electrode substrate 10 and the second electrode substrate 20. An electrolyte 50 is filled in the cell space formed by the first electrode substrate 10, the second electrode substrate 20, and the sealing portion 40.

The first electrode substrate 10 is composed of a transparent conductive substrate 15 constituted by a transparent substrate 11 and a transparent conductive film 12 as a first electrode provided on the transparent substrate 11.

The second electrode substrate 20 is equipped with a conductive substrate 21 which serves both as a substrate and a second electrode and a catalyst layer 22 which is provided on the transparent conductive substrate 15 side of the conductive substrate 21 and contributes to the reduction of the electrolyte 50.

The oxide semiconductor layer 30 is disposed on the inside of the sealing portion 40. In addition, a photosensitizing dye is adsorbed to the oxide semiconductor layer 30.

The electrolyte 50 is provided between the transparent conductive film 12 as the first electrode and the conductive substrate 21 as the second electrode and contains a halogen, a halide salt which forms a redox couple with the halogen, and a silver halide. Moreover, the concentration of the silver halide is from 0.0001 to 10 mM.

According to the dye-sensitized photoelectric conversion element 100, it is possible to sufficiently maintain the output under a condition having a low illuminance and to sufficiently suppress an increase in output under a condition having a high illuminance as the electrolyte 50 has the constitution described above. Hence, in a case in which the dye-sensitized photoelectric conversion element 100 is used as a power source of a low-power driven device, it is possible to sufficiently suppress the damage to this device even when the dye-sensitized photoelectric conversion element 100 is placed under a condition having a high illuminance.

Next, the first electrode substrate 10, the second electrode substrate 20, the sealing portion 40, the electrolyte 50, and the photosensitizing dye will be described in detail.

<First electrode substrate>

The first electrode substrate 10 is constituted by the transparent conductive substrate 15 as described above and the transparent conductive substrate 15 is constituted by the transparent substrate 11 and the transparent conductive film 12 as the first electrode provided on the transparent substrate 11.

The material constituting the transparent substrate 11 may be, for example, any transparent material, and examples of such a transparent material may include glass such as borosilicate glass, soda lime glass, glass which is made of soda lime and whose iron component is less than that of ordinary soda lime glass, and quartz glass, and polyethylene terephthalate (PET), polyethylene naphthalate (PEN), polycarbonate (PC), and polyethersulfone (PES). The thickness of the transparent substrate 11 is appropriately determined depending on the size of the dye-sensitized photoelectric conversion element 100 and is not particularly limited, but, for example, the thickness may be set in the range of 50-40000 $\mu$m.

Examples of the material constituting the transparent conductive film 12 may include a conductive metal oxide such as tin-doped indium oxide (ITO), tin oxide ($SnO_2$), and fluorine-doped tin oxide (FTO) . The transparent conductive film 12 may be constituted by a single layer or a laminate consisting of a plurality of layers constituted by different conductive metal oxides. In a case in which the transparent conductive film 12 is constituted by a single layer, it is preferable that the transparent conductive film 12 be constituted by FTO since FTO has high heat resistance and chemical resistance. The thickness of the transparent conductive film 12 may be set in the range of 0.01-2 $\mu$m, for example.

(Second electrode substrate)

As described above, the second electrode substrate 20 is equipped with the conductive substrate 21 which serves as both as a substrate and as a second electrode and the conductive catalyst layer 22 which is provided on the side of the conductive substrate 21 facing the first electrode substrate 10 and which contributes to the reduction of the electrolyte 50.

The conductive substrate 21 is constituted by, for example, a corrosion-resistant metallic material such as titanium, nickel, platinum, molybdenum, tungsten, aluminum and stainless steel. Alternatively, the conductive substrate 21 may be separated into a substrate and a second electrode and thus may be constituted by a laminate obtained by forming a transparent conductive film composed of a conductive oxide such as ITO or FTO as a second electrode on the transparent substrate 11 described above. The thickness of the conductive substrate 21 is appropriately determined depending on the size of the dye-sensitized photoelectric conversion element 100 and is not particularly limited, but the thickness may be set to 0.005-4 mm, for example.

The catalyst layer 22 is constituted by platinum, a carbon-based material, a conductive polymer or the like. Here, as the carbon-based material, carbon nanotubes are particularly suitably used. Incidentally, the second electrode substrate 20 may not have the catalyst layer 22 in a case in which the conductive substrate 21 has a catalyst function (for example, the conductive substrate includes carbon or the like).

<Oxide semiconductor layer>

The oxide semiconductor layer 30 is constituted by oxide semiconductor particles. The oxide semiconductor particles are constituted by, for example, titanium oxide ($TiO_2$), zinc oxide (ZnO), tungsten oxide ($WO_3$), niobium oxide ($Nb_2O_5$), strontium titanate ($SrTiO_3$), tin oxide ($SnO_2$), indium oxide ($In_3O_3$), zirconium oxide ($ZrO_2$), thallium oxide ($Ta_2O_5$), lanthanum oxide ($La_2O_3$), yttrium oxide ($Y_2O_3$), holmium oxide ($Ho_2O_3$), bismuth oxide ($Bi_2O_3$), cerium oxide ($CeO_2$), aluminum oxide ($Al_2O_3$), or two or more kinds of these. The thickness of the oxide semiconductor layer 30 may be set to 0.1-100 $\mu$m, for example.

<Sealing portion>

Examples of the sealing portion 40 may include a resin composed of a thermoplastic resin such as a modified polyolefin resin, a vinyl alcohol polymer or the like; an ultraviolet curable resin and the like. Examples of the modified polyolefin resin may include an ionomer, an ethylene-vinylacetatic anhydride copolymer, an ethylene-methacrylic acid copolymer, and an ethylene-vinyl alcohol copolymer. These resins may be used singly or in combination of two or more kinds thereof.

<Electrolyte>

The electrolyte 50 contains a halogen, a halide salt, and a silver halide as described above.

Although it is preferable that they may have different halogen atoms, the halogen and the halide salt have the same halogen atom.

(Halogen)

In the electrolyte 50, examples of the halogen atom contained in the halogen and the halide salt may include a bromine atom and an iodine atom.

Among them, the halogen atom contained in the halogen and the halide salt is preferably an iodine atom. In other words, it is preferable that the halogen be iodine and the halide salt be an iodide salt.

In this case, the electron injection efficiency is further improved since the HOMO (bonding orbital) level of the photosensitizing dye used in the dye-sensitized photoelectric conversion element 100 and the redox level in the electrolyte are at a proper position. In addition, the reduction reaction of iodine is more excellent than that of other halogen species, thus the electrolyte 50 can instantly return the photoexcited photosensitizing dye to the ground state and it is possible to inhibit the reverse reaction or the like by the photosensitizing dye.

(Halide salt)

Examples of the halide salt contained in the electrolyte 50 may include a bromide salt such as lithium bromide, sodium bromide, potassium bromide, tetramethylammonium bromide, tetraethylammonium bromide, tetrabutylammonium bromide, tetrahexylammonium bromide, 1-hexyl-3-methylimidazolium bromide, 1-ethyl-3-propylimidazolium bromide, dimethylimidazolium bromide, ethylmethylimidazolium bromide, dimethylpropylimidazolium bromide, butylmethylimidazolium bromide, or methylpropylimidazolium bromide and an iodide salt such as lithium iodide, sodium iodide, potassium iodide, tetramethylammonium iodide, tetraethylammonium iodide, tetrabutylammonium iodide, tetrahexylammonium iodide, 1-hexyl-3-methylimidazolium iodide, 1-ethyl-3-propylimidazolium iodide, dimethylimidazolium iodide, ethylmethylimidazolium iodide, dimethylpropylimidazolium iodide, butylmethylimidazolium iodide, or methylpropylimidazolium iodide.

Examples of the redox pair formed by the halogen and the halide salt may include a combination of a halide ion and a polyhalide ion. Specific examples of the redox pair may include $I^-/I_3^-$ and $Br^-/Br_3^-$.

In a case in which the electrolyte 50 contains a redox couple composed of a combination of a halide ion and a polyhalide ion, the concentration of the polyhalide ion is preferably $\leq$ 0.006 M. In this case, it is possible to further decrease the leakage current that is greatly affected in a low illuminance environment since the concentration of the polyhalide ion which carries an electron is low. Hence, it is possible to further increase the open circuit voltage and thus to further improve the photoelectric conversion characteristics as compared to a case in which the concentration of the polyhalide ion exceeds 0.006 M. The concentration of the polyhalide ion is more preferably > 0 M and $\leq 6 \times 10^{-6}$ M and still more preferably > 0 M and $\leq 6 \times 10^{-8}$ M.

(Silver Halide)

The concentration of the silver halide in the electrolyte 50 may be 0.0001-10 mM. In this case, it is possible to more sufficiently maintain the output of the dye-sensitized photoelectric conversion element 100 under a condition having a low illuminance and to more sufficiently suppress an increase in output of the dye-sensitized photoelectric conversion element 100 under a condition having a high illuminance as compared to a case in which the concentration of the silver halide is out of the above range.

The concentration of the silver halide in the electrolyte 50 is more preferably 0.0001-0.01 mM and still more preferably 0.0005-0.005 mM. In a case in which the concentration of the silver halide in the electrolyte 50 is 0.0001-0.01 mM, it is possible to more sufficiently maintain the output of the dye-sensitized photoelectric conversion element 100 under a condition having a low illuminance and to more sufficiently suppress an increase in output of the dye-sensitized photoelectric conversion element 100 under a condition having a high illuminance as compared to a case in which the concentration of the silver halide in the electrolyte 50 is out of the above range.

It is preferable that the ratio (hereinafter, referred to as the "concentration ratio") of the concentration of the silver halide in the electrolyte 50 to the concentration of the halogen in the electrolyte 50 be greater than $1 \times 10^{-5}$ times.

In this case, the concentration of the silver halide is relatively great when the concentration ratio is greater than $1 \times 10^{-5}$ times, and the equilibrium reaction between the silver halide and silver thus proceeds in the direction in which the concentration of silver increases. Hence, it is possible to more sufficiently suppress an increase in output of the dye-sensitized photoelectric conversion element 100 even when the dye-sensitized photoelectric conversion element 100 is placed under a condition having a high illuminance.

It is more preferable that the concentration ratio be $2 \times 10^{-5}$ times or more. In this case, it is possible to more sufficiently suppress an increase in output under a condition having a high illuminance as compared to a case in which the concentration ratio is less than $2 \times 10^{-5}$ times. It is still more preferable that the concentration ratio be $5 \times 10^{-5}$ times or more. In this case, it is possible to still more sufficiently suppress an increase in output under a condition having a high illuminance as compared to a case in which the concentration ratio is less than $5 \times 10^{-5}$ times.

However, the concentration ratio is usually 5 times or less but preferably 1 time or less from the viewpoint of more sufficiently suppressing a decrease in output due to inhibition of the oxidation-reduction reaction between the halogen and the halide salt which form the redox couple. In this case, the output is higher under a condition having a low illuminance as compared to a case in which the concentration ratio exceeds 1 time. It is more preferable that the concentration ratio be $5 \times 10^{-2}$ times or less.

The halogen atom constituting the silver halide may be the same as or different from the halogen atom constituting the halogen and the halide salt, but it is preferably the same. In this case, the output suppressing effect is more stably obtained.

(Organic solvent)

The electrolyte 50 further contains an organic solvent. It is possible to use acetonitrile, methoxy acetonitrile, methoxy propionitrile, propionitrile, ethylene carbonate, propylene carbonate, diethyl carbonate, $\gamma$-butyrolactone, valeronitrile, pivalonitrile, glutaronitrile, methacrylonitrile, isobutyronitrile, phenyl acetonitrile, acrylonitrile, succinonitrile, oxalonitrile, pentanenitrile, and adiponitrile as the organic solvent. These can be used singly or in combination of two or more kinds thereof.

(Others)

Moreover, as the electrolyte 50, a nanocomposite gel electrolyte of a quasi-solid electrolyte which is obtained by kneading nanoparticles such as $SiO_2$, $TiO_2$, and carbon nanotubes with the electrolyte above to form a gel-like form may be used, or an electrolyte gelled using an organic gelling agent such as polyvinylidene fluoride, a polyethylene oxide derivative, and an amino acid derivative may also be used.

(Photosensitizing dye)

Examples of the photosensitizing dye may include a ruthenium complex having a ligand containing a bipyridine structure or a terpyridine structure, or an organic dye such as porphyrin, eosin, rhodamine, and merocyanine. Among them, a ruthenium complex having a ligand containing a bipyridine structure or a ruthenium complex having a ligand containing a terpyridine structure is preferable. In this case, it is possible to more improve the photoelectric conversion characteristics of the dye-sensitized photoelectric conversion element 100.

Next, the method of manufacturing the above-mentioned dye-sensitized photoelectric conversion element 100 will be described.

First, a first electrode substrate 10 constituted by a transparent conductive substrate 15 obtained by forming a transparent conductive film 12 on one transparent substrate 11 is prepared.

As the method of forming the transparent conductive film 12, a sputtering method, a vapor deposition method, a spray pyrolysis deposition method, a CVD method or the like is used.

Next, an oxide semiconductor layer 30 is formed on the transparent conductive film 12. The oxide semiconductor layer 30 is formed by printing a paste for porous oxide semiconductor layer formation containing oxide semiconductor particles and then firing it.

The paste for oxide semiconductor layer formation contains a resin such as polyethylene glycol and a solvent such as terpineol in addition to the oxide semiconductor particles.

It is possible to use, for example, a screen printing method, a doctor blading method, or a bar coating method as the printing method of the paste for oxide semiconductor layer formation.

The firing temperature varies depending on the kind of the oxide semiconductor particles but is usually 350-600°C, and the firing time also varies depending on the kind of the oxide semiconductor particles but is usually 1-5 hours.

In this manner, the working electrode is obtained.

Next, the photosensitizing dye is supported on the surface of the oxide semiconductor layer 30 of the working electrode. For this, the photosensitizing dye may be adsorbed on the oxide semiconductor layer 30 by immersing the working electrode in a solution containing the photosensitizing dye, making the photosensitizing dye adsorb on the oxide semiconductor layer 30, then washing out the extra photosensitizing dye with the solvent component of the above solution, and then drying. However, the photosensitizing dye may be adsorbed on the oxide semiconductor layer 30 by coating a solution containing the photosensitizing dye on the oxide semiconductor layer 30 and then drying.

Next, the electrolyte 50 is prepared. The electrolyte 50 can be obtained, for example, by adding a solid silver halide to an electrolytic solution containing a halogen and a halide salt which forms a redox couple with the halogen. Alternatively, the electrolyte 50 can also be obtained by dissolving a halogen, a halide salt which forms a redox pair with the halogen, and a solid silver halide in a solvent. At this time, the concentration of the silver halide in the electrolyte 50 is set to from 0.0001 to 10 mM.

Next, the electrolyte 50 is disposed on the oxide semiconductor layer 30. The electrolyte 50 can be disposed, for example, by a printing method such as screen printing or the like.

Next, an annular sealing portion forming body is prepared. The sealing portion forming body can be obtained, for example, by preparing a resin film for sealing and forming one quadrangular opening in the resin film for sealing.

Thereafter, this sealing portion forming body is bonded onto the first electrode substrate 10. In this time, bonding of the sealing portion forming body to the first electrode substrate 10 can be conducted, for example, by melting and heating the sealing portion forming body.

Next, the second electrode substrate 20 is prepared, disposed so as to close the opening of the sealing portion forming body, and then bonded to the sealing portion forming body. At this time, the sealing portion forming body may be bonded to the second electrode substrate 20 in advance and this sealing portion forming body may be bonded to the sealing portion forming body on the first electrode substrate 10 side. Bonding of the sealing portion forming body to the second electrode substrate 20 may be conducted under the atmospheric pressure or reduced pressure, but it is preferably conducted under reduced pressure.

The dye-sensitized photoelectric conversion element 100 constituted by one dye-sensitized photoelectric conversion cell is obtained in the manner described above.

The invention is not limited to the embodiments described above. For example, in the embodiments described above, the dye-sensitized photoelectric conversion element 100 has a structure in which the oxide semiconductor layer 30 is provided on the transparent conductive film 12 of the transparent conductive substrate 15 and light is thus received from the transparent conductive substrate 15 side, but the dye-sensitized photoelectric conversion element may have a structure in which an opaque material (for example, metal substrate) is used as the base material on which the oxide semiconductor layer 30 is formed, a transparent material is used as a base material for forming the second electrode substrate 20, and light is thus received from the counter electrode side, and further, it may have a structure in which light is received from both surfaces.

In addition, in the above embodiment, the oxide semiconductor layer 30 is provided on the transparent conductive substrate 15, but the oxide semiconductor layer 30 may be provided on the conductive substrate 21 that is the second electrode. However, in this case, the catalyst film 22 on the conductive substrate 21 is provided on the transparent conductive substrate 15.

In addition, in the above embodiment, the first electrode substrate 10 is constituted by the transparent substrate 11 and the transparent conductive film 12 which is provided on the transparent substrate 11 and is the first electrode, but the first electrode substrate 10 may be constituted by an insulating substrate and a plurality of metal wires which are provided on one surface side of the insulating substrate and are the first electrode. Here, the periphery of the plurality of metal wires may be covered with an oxide semiconductor layer.

In addition, in the embodiments described above, the dye-sensitized photoelectric conversion element is constituted by one dye-sensitized photoelectric conversion cell 60, but the dye-sensitized photoelectric conversion element may be equipped with a plurality of dye-sensitized photoelectric conversion cells 60.

In addition, in the embodiment described above, the dye-sensitized photoelectric conversion element 100 does not have a current-collecting wiring containing silver or the like on the transparent conductive film 12, but, the dye-sensitized photoelectric conversion element 100 may have the current-collecting wiring on the transparent conductive film 12. Here, in a case in which the current-collecting wiring is in contact with the electrolyte 50, it is preferable that the current-collecting wiring be covered with a wiring protective layer in terms of sufficiently suppressing the corrosion of the current-collecting wiring. The wiring protective layer is constituted by glass, an insulating resin or the like.

Furthermore, in the above embodiment, the first electrode substrate 10 and the second electrode substrate 20 are joined by the sealing portion 40, but the first electrode substrate 10 and the second electrode substrate 20 may not be joined by the sealing portion 40 in a case in which a porous insulating layer impregnated with the electrolyte 50 is sandwiched between the first electrode substrate 10 and the second electrode substrate 20. In this case, it is preferable to provide a base material on the side opposite to the first electrode substrate 10 with respect to the second electrode substrate 20 and to join the base material and the first electrode substrate 10 by the sealing portion.

EXAMPLES

Hereinafter, the contents of the invention will be more specifically described with reference to Examples, but the invention is not limited to the following Examples.

(Examples 1-18 and Comparative Examples 1-10)

<Preparation of Electrolyte of Dye-Sensitized Photoelectric Conversion Element for Low Illuminance>

The electrolytes were prepared by adding silver iodide (silver halide) and iodine (halogen) to a 3-methoxypropionitrile (MPN) solution containing 1,2-dimethyl-3-propylimidazolium iodide (DMPImI) at 0.6 M so as to have the content (concentration C1 or C2) presented in Table 1 or Table 2.

<Fabrication of Dye-Sensitized Photoelectric Conversion Element>

First, a transparent conductive substrate formed by forming a transparent conductive film which was composed of FTO and had a thickness of 1 $\mu$m on a transparent substrate which was composed of glass and had a thickness of 1 mm was prepared as a first electrode substrate.

Next, a paste for oxide semiconductor layer formation containing titania was coated on the transparent conductive film of the first electrode substrate, dried, and then fired at 500°C for 1 hour. A working electrode having an oxide semiconductor layer having a thickness of 40 $\mu$m was thus obtained.

Next, the working electrode was immersed in the photosensitizing dye solution for a whole day and night, then taken out therefrom, and dried, thereby adsorbing the photosensitizing dye to the oxide semiconductor layer. The photosensitizing dye solution was fabricated by dissolving a photosensitizing dye composed of Z907 in 1-propanol solvent so as to have a concentration of 0.2 mM.

Next, the electrolyte prepared as described above was coated on the oxide semiconductor layer.

Next, a sealing portion forming body for forming the sealing portion was prepared. The sealing portion forming body was obtained by preparing one sheet of resin film for sealing which was composed of an ionomer (trade name: Himilan manufactured by DuPont-Mitsui Polychemicals Co., Ltd.) and had a size of 10 mm × 10 mm × 50 $\mu$m and forming a quadrangular opening on the resin film for sealing. At this time, the opening was formed so as to have a size of 6 mm × 6 mm × 50 $\mu$m.

Thereafter, this sealing portion forming body was mounted on the working electrode, and the sealing portion forming body was then heated and melted to be bonded to the working electrode.

Next, a counter electrode as a second electrode substrate was prepared. The counter electrode was prepared by forming a catalyst layer which was composed of platinum and had a thickness of 10 nm on a titanium foil having a size of 15 mm × 15 mm × 1 mm by a sputtering method. In addition, one more of the above-mentioned sealing portion forming body was prepared, and this sealing portion forming body was bonded to the surface facing the working electrode of the counter electrode in the same manner as the above.

Thereafter, the sealing portion forming body bonded to the working electrode was allowed to face the sealing portion forming body bonded to the counter electrode so that the sealing portion forming bodies overlapped with each other. Thereafter, in this state, the sealing portion forming bodies were heated and melted while being pressurized. A sealing portion was thus formed between the working electrode and the counter electrode.

A dye-sensitized photoelectric conversion element composed of one dye-sensitized photoelectric conversion cell was thus obtained.

<Evaluation on Characteristics>

(1) Evaluation on Suppression of Increase in Output under Condition Having High Illuminance

Immediately after being fabricated, the dye-sensitized photoelectric conversion elements of Examples 1-18 and Comparative Examples 1-10 obtained as described above were subjected to the measurement of IV curve in a state of being irradiated with white light having 100 lux, and the maximum output operating power $Pm_0$ ($\mu$W) to be calculated from this IV curve was calculated as the output 1. Incidentally, the light source, illuminance meter, and power source used for the measurement of IV curve are as follows.

Light source: white LED (product name "LEL-SL 5 N-F" manufactured by TOSHIBA LIGHTING & TECHNOLOGY CORPORATION)

Illuminance meter: product name "AS ONE LM - 331" manufactured by AS ONE Corporation

Power source: voltage/current generator (product name "ADVANTEST R 6246" manufactured by Advantest Corporation)

Thereafter, the dye-sensitized photoelectric conversion elements were placed in a state of being irradiated with pseudo sunlight having a high illuminance of 100,000 lux for 10 hours, and immediately thereafter the output thereof was calculated as the output 2 in the same manner as the above. Thereafter, the decreasing rate of output was calculated based on the following formula.

$$\text{Decreasing rate of output (\%)} = 100 \times (\text{output 1} - \text{output 2})/\text{output 1}$$

The results are presented in Tables 1 and 2. Therein, the criteria for judging "◎", "○", and "×" are as follows.

"◎": Decreasing rate of output is ≥ 50%

"○": Decreasing rate of output is ≥ 30% and < 50%

"×": Decreasing rate of output is < 30%

Incidentally, it is indicated that the dye-sensitized photoelectric conversion element can sufficiently suppress an increase in output under a condition having a high illuminance as the decreasing rate of output is greater. In addition, Table 1 presents the results in a case in which the concentration of halogen is constant and Table 2 presents the results in a case in which the concentration of halogen is set to various values. The acceptance and rejection criteria in Tables 1 and 2 are as follows.

(Acceptance and rejection criteria)

Acceptance: "◎" and "○"
Rejection: "×"

In addition, the output of all the dye-sensitized photoelectric conversion elements was recovered by leaving them to stand still in a dark place for one week.

(2) Evaluation on Maintenance of Output under Condition Having Low Illuminance

The dye-sensitized photoelectric conversion elements of Examples 1-18 and Comparative Examples 1-10 obtained as described above were placed in a state of being irradiated with light having a low illuminance of 1,000 lux for 10 hours, and immediately thereafter the output thereof was calculated as the output 3 in the same manner as the above. Thereafter, the decreasing rate of output was calculated based on the following formula.

$$\texttt{Decreasing rate of output (\%) = 100} \times \texttt{(output 1 -}$$
$$\texttt{output 3)/output 1}$$

The results are presented in Tables 1 and 2. Therein, the criteria for judging "A", "B", and "C" are as follows.

"A": Decreasing rate of output is $\leq 20\%$
"B": Decreasing rate of output is $> 20\%$ and $< 30\%$
"C": Decreasing rate of output is $\geq 30\%$

Incidentally, it is indicated that the dye-sensitized photoelectric conversion element can sufficiently maintain the output under a condition having a low illuminance as the decreasing rate of output is smaller. The acceptance and rejection criteria in Tables 1 and 2 are as follows.

(Acceptance and rejection criteria)

Acceptance: "A" and "B"
Rejection: "C"

In addition, the output of all the dye-sensitized photoelectric conversion elements was recovered by leaving them to stand still in a dark place for one week.

(3) Light Irradiation Time until Output Decreases

The dye-sensitized photoelectric conversion elements of Examples 1-6 and Comparative Examples 1 and 2 obtained as described above were repeatedly subjected to the following operations (I) and (II), thereby measuring the time that was irradiated with pseudo sunlight having an illuminance of 100,000 lux and required until the output of the conversion elements in a state of being irradiated with light having 100 lux decreased to $\leq 30\%$.

(I) The dye-sensitized photoelectric conversion element is placed in a state of being irradiated with pseudo sunlight having an illuminance of 100,000 lux.
(II) Every 1 hour, the dye-sensitized photoelectric conversion element is placed in a state of being irradiated with light from a white LED having 100 lux and subjected to the output measurement.

The results are presented in Table 1. In addition, the output of all the dye-sensitized photoelectric conversion elements was recovered by leaving them to stand still in a dark place for one week.

[Table 1]

| | Halogen | Silver halide | Suppression of increase in output (Illuminance: 100,000 lux) | Maintenance of output (Illuminance: 1000 lux) | Light irradiation time until output decreases (h) |
| | Concentration C1 (mM) | Concentration C2 (mM) | | | |
|---|---|---|---|---|---|
| Example 1 | 2 | 0.0001 | ◎ | A | 5 |

(continued)

|  | Halogen | Silver halide | Suppression of increase in output (Illuminance: 100,000 lux) | Maintenance of output (Illuminance: 1000 lux) | Light irradiation time until output decreases (h) |
|---|---|---|---|---|---|
|  | Concentration C1 (mM) | Concentration C2 (mM) |  |  |  |
| Example 2 | 2 | 0.001 | ◎ | A | 3.8 |
| Example 3 | 2 | 0.01 | ◎ | A | 2 |
| Example 4 | 2 | 0.1 | ◎ | A | 1.6 |
| Example 5 | 2 | 1 | ◎ | A | 1.3 |
| Example 6 | 2 | 10 | ◎ | A | 1 |
| Comparative Example 1 | 2 | 0.00001 | × | A | 50 |
| Comparative Example 2 | 2 | 100 | ◎ | C | 1 |

[Table 2]

|  | Halogen | Silver halide | C2/C1 | Suppression of increase in output (Illuminance : 100, 000 lux) | Maintenance of output (Illuminance : 1000 lux) |
|---|---|---|---|---|---|
|  | Concentration C1 (mM) | Concentration C2 (mM) |  |  |  |
| Example 1 | 2 |  | $5 \times 10^{-5}$ | ◎ | A |
| Example 7 | 10 |  | $1 \times 10^{-5}$ | ○ | A |
| Example 8 | 200 | 0.0001 | $5 \times 10^{-7}$ | ○ | A |
| Example 9 | 500 |  | $2 \times 10^{-7}$ | ○ | A |
| Example 10 | 1000 |  | $1 \times 10^{-7}$ | ○ | A |
| Example 3 | 2 |  | $5 \times 10^{-3}$ | ◎ | A |
| Example 11 | 10 |  | $1 \times 10^{-3}$ | ◎ | A |
| Example 12 | 200 | 0.01 | $5 \times 10^{-5}$ | ◎ | A |
| Example 13 | 500 |  | $2 \times 10^{-5}$ | ◎ | A |
| Example 14 | 1000 |  | $1 \times 10^{-5}$ | ○ | A |

(continued)

| | Halogen | Silver halide | C2/C1 | Suppression of increase in output (Illuminance : 100, 000 lux) | Maintenance of output (Illuminance : 1000 lux) |
|---|---|---|---|---|---|
| | Concentration C1 (mM) | Concentration C2 (mM) | | | |
| Example 6 | 2 | 10 | $5 \times 10^0$ | ◎ | A |
| Example 15 | 10 | | $1 \times 10^0$ | ◎ | A |
| Example 16 | 200 | | $5 \times 10^{-2}$ | ◎ | A |
| Example 17 | 500 | | $2 \times 10^{-2}$ | ◎ | A |
| Example 18 | 1000 | | $1 \times 10^{-2}$ | ◎ | A |
| Comparative Example 1 | 2 | 0.00001 | $5 \times 10^{-6}$ | × | A |
| Comparative Example 3 | 10 | | $1 \times 10^{-6}$ | × | A |
| Comparative Example 4 | 200 | | $5 \times 10^{-8}$ | × | A |
| Comparative Example 5 | 500 | | $2 \times 10^{-8}$ | × | A |
| Comparative Example 6 | 1000 | | $1 \times 10^{-8}$ | × | A |
| Comparative Example 2 | 2 | 100 | $5 \times 10^1$ | ◎ | c |
| Comparative Example 7 | 10 | | $1 \times 10^1$ | ◎ | c |
| Comparative Example 8 | 200 | | $5 \times 10^{-1}$ | ◎ | c |
| Comparative Example 9 | 500 | | $2 \times 10^{-1}$ | ◎ | c |
| Comparative Example 10 | 1000 | | $1 \times 10^{-1}$ | ◎ | c |

From the results presented in Tables 1 and 2, it has been found that the dye-sensitized photoelectric conversion elements of Examples 1-18 satisfy the acceptance criteria in both maintenance of the output of the dye-sensitized photoelectric conversion element under a condition having a low illuminance and suppression of an increase in output of the dye-sensitized photoelectric conversion element under a condition having a high illuminance. On the other hand, it has been found that the dye-sensitized photoelectric conversion elements of Comparative Examples 1-10 do not satisfy the acceptance criteria in at least either of maintenance of the output of the dye-sensitized photoelectric conversion element under a condition having a low illuminance or suppression of an increase in output of the dye-sensitized photoelectric conversion element under a condition having a high illuminance.

In particular, from the results presented in Table 2, it has been found that an increase in output of the dye-sensitized photoelectric conversion element in the case of being placed under a condition having a high illuminance can be sufficiently suppressed in a case in which the ratio of the concentration of the silver halide to the concentration of the halogen is greater than a certain value.

From the above, it has been confirmed that it is possible to sufficiently maintain the output of the dye-sensitized photoelectric conversion element under a condition having a low illuminance and to sufficiently suppress an increase in output of the dye-sensitized photoelectric conversion element under a condition having a high illuminance according to the electrolyte of a dye-sensitized photoelectric conversion element for low illuminance of the present invention.

EXPLANATIONS OF REFERRENCE NUMERALS

10      First electrode substrate

11      Transparent substrate

12      Transparent conductive film (first electrode)

20      Second electrode substrate

21      Conductive substrate (second electrode)

30      Oxide semiconductor layer

50      Electrolyte

60      Dye-sensitized photoelectric conversion cell

100     Dye-sensitized photoelectric conversion element

**Claims**

1.  An electrolyte of a dye-sensitized photoelectric conversion element for low illuminance, comprising:

    - a halogen,
    - a halide salt forming a redox couple with the halogen,
    - a silver halide at a concentration of 0.0001-10 mM, and
    - an organic solvent.

2.  The electrolyte of claim 1, wherein a ratio of a concentration of the silver halide to a concentration of the halogen is greater than $1 \times 10^{-5}$ times.

3.  The electrolyte of claim 2, wherein the ratio of the concentration of the silver halide to the concentration of the halogen is $\geq 2 \times 10^{-5}$ times.

4.  The electrolyte of claim 2 or 3, wherein a ratio of a concentration of the silver halide to a concentration of the halogen is $\leq 1$ time.

5.  The electrolyte of any of claims 1-4, wherein the concentration of the silver halide is 0.0001-0.01 mM.

6.  The electrolyte of any of claims 1-5, wherein the halogen constituting the silver halide is the same as the halogen constituting the halogen and the halide salt.

7.  A dye-sensitized photoelectric conversion element for low illuminance comprising at least one dye-sensitized photoelectric conversion cell including:

    - a first electrode;
    - a second electrode facing the first electrode;
    - an oxide semiconductor layer provided on the first electrode or the second electrode; and
    - provided between the first electrode and the second electrode, an electrolyte including the electrolyte of any of claims 1-6.

**Patentansprüche**

1. Elektrolyt eines Farbstoff-sensibilisierten fotoelektrischen Umwandlungselements für niedrige Lichtintensität, umfassend:

   - ein Halogen,
   - ein Halogenidsalz, das ein Redoxpaar mit dem Halogen bildet,
   - ein Silberhalogenid in einer Konzentration von 0,0001 bis 10 mM und
   - ein organisches Lösungsmittel.

2. Elektrolyt gemäß Anspruch 1, worin ein Verhältnis einer Konzentration des Silberhalogenids zu einer Konzentration des Halogens größer als $1 \times 10^{-5}$-fach ist.

3. Elektrolyt gemäß Anspruch 2, worin das Verhältnis einer Konzentration des Silberhalogenids zu einer Konzentration des Halogens $\geq 2 \times 10^{-5}$-fach ist.

4. Elektrolyt gemäß Anspruch 2 oder 3, worin ein Verhältnis einer Konzentration des Silberhalogenids zu einer Konzentration des Halogens $\leq 1$-fach ist.

5. Elektrolyt gemäß irgendeinem der Ansprüche 1 bis 4, worin die Konzentration des Silberhalogenids 0,0001 bis 0,01 mM beträgt.

6. Elektrolyt gemäß irgendeinem der Ansprüche 1 bis 5, worin das Halogen, das das Silberhalogenid aufbaut, das gleiche ist wie das Halogen, das das Halogen und das Halogenidsalz aufbaut.

7. Farbstoff-sensibilisiertes fotoelektrisches Umwandlungselement für niedrige Lichtintensität, umfassend zumindest eine Farbstoff-sensibilisierte fotoelektrische Umwandlungszelle, enthaltend:

   - eine erste Elektrode;
   - eine zweite Elektrode, die der ersten Elektrode gegenüberliegt;
   - eine Oxid-Halbleiterschicht, die auf der ersten Elektrode oder der zweiten Elektrode vorgesehen ist; und
   - einen Elektrolyt, der den Elektrolyt gemäß irgendeinem der Ansprüche 1 bis 6 umfasst, vorgesehen zwischen der ersten Elektrode und der zweiten Elektrode.

**Revendications**

1. Électrolyte d'un élément de conversion photoélectrique sensible à un colorant pour faible éclairement, comprenant :

   - un halogène,
   - un sel d'halogénure formant un couple rédox avec l'halogène,
   - un halogénure d'argent à une concentration de 0,0001-10 mM, et
   - un solvant organique.

2. Électrolyte selon la revendication 1, dans lequel un ratio d'une concentration de l'halogénure d'argent par rapport à une concentration de l'halogène est supérieur à $1 \times 10^{-5}$ fois.

3. Électrolyte selon la revendication 2, dans lequel le ratio de la concentration de l'halogénure d'argent par rapport à la concentration de l'halogène est $\geq 2 \times 10^{-5}$ fois.

4. Électrolyte selon la revendication 2 ou 3, dans lequel le ratio de la concentration de l'halogénure d'argent par rapport à la concentration de l'halogène est $\leq 1$ fois.

5. Électrolyte selon l'une quelconque des revendications 1 à 4, dans lequel la concentration de l'halogénure d'argent est de 0,0001-0,01 mM.

6. Électrolyte selon l'une quelconque des revendications 1 à 5, dans lequel l'halogène constituant l'halogénure d'argent est identique à l'halogène constituant l'halogène et le sel d'halogénure.

**7.** Élément de conversion photoélectrique sensible à un colorant pour faible éclairement comprenant au moins une cellule de conversion photoélectrique sensible à un colorant comprenant :

- une première électrode ;
- une seconde électrode faisant face à la première électrode ;
- une couche semi-conductrice d'oxyde ménagée sur la première électrode ou la seconde électrode ; et
- ménagé entre la première électrode et la seconde électrode, un electrolyte incluant l'électrolyte de l'une quelconque des revendications 1 à 6.

# Fig.1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S60170173 A

- JP 2014110133 A

**Non-patent literature cited in the description**

- **H. PAULSSON et al.** *Solar Energy Materials and Solar Cells,* 2004, vol. 82, 345-360